# EUROPÄISCHE PATENTANMELDUNG

(11) **EP 1 205 352 A2**
(43) Veröffentlichungstag der Anmeldung: **15.05.2002**
(21) Anmeldenummer: 01125957.9
(22) Anmeldetag: 31.10.2001
(51) Int. Cl.: B60Q 3/00

(54) **Beleuchtungseinrichtung**

(30) Priorität: 09.11.2000 DE 20019073 U
(71) Anmelder: Hella KG Hueck & Co., 59552 Lippstadt (DE)
(72) Erfinder: Köpfer, Frank, 79872 Bernau (DE); Zwick, Hubert, 70173 Stuttgart (DE); Woernle, Heid, 79111 Freiburg (DE); Ruths, Torsten, Dr., 59557 Lippstadt (DE)

(57) **Zusammenfassung**

Eine Beleuchtungseinrichtung (1), insbesondere zur Beleuchtung des Innenraumes oder eines Inneneinrichtungsteiles (2) eines Kraftfahrzeugs, weist mindestens ein Leuchtmittel (3) und zumindest einen mit seiner Lichteinkoppelfläche (4) im Lichtabstrahlbereich des Leuchtmittels (3) angeordneten stabförmigen Lichtleiter (5) auf. Am Außenumfang des Lichtleiters (5) sind optische Störstellen (6a, 6b) angeordnet, die in Erstreckungsrichtung des Lichtleiters (5) zueinander versetzt sind. Die Störstellen (6a, 6b) sind so ausgebildet, daß die innerhalb des Lichtleiters (5) auf die Störstellen (6a, 6b) auftreffende Lichtstrahlen derart gestreut und/oder reflektiert werden, daß sie aus dem Lichtleiter (5) austreten. Benachbart nebeneinander angeordneten Störstellen (6a, 6b) sind jeweils durch im wesentlichen störstellenfreie Bereiche voneinander beabstandet. Die Abstände zwischen jeweils zueinander benachbarten Störstellen (6a, 6b) sind unterschiedlich, um das Inneneinrichtungsteil (2) ungleichmäßig zu beleuchten.

## Beschreibung

Die Erfindung betrifft eine Beleuchtungseinrichtung, insbesondere zur Beleuchtung des Innenraumes oder eines Inneneinrichtungsteiles eines Kraftfahrzeugs, mit mindestens einem Leuchtmittel und zumindest einem mit seiner Lichteinkoppelfläche im Lichtabstrahlbereich des Leuchtmittels angeordneten stabförmigen Lichtleiter, der an seinem Außenumfang in Erstreckungsrichtung des Lichtleiters zueinander versetzte optische Störstellen aufweist, an denen innerhalb des Lichtleiters darauf auftreffendes Licht derart gestreut und/oder reflektiert wird, daß es an einem der betreffenden Störstelle gegenüberliegenden Umfangsbereich des Lichtleiters aus diesem austritt, wobei zueinander benachbart nebeneinander angeordneten Störstellen jeweils durch einen im wesentlichen störstellenfreien Bereich voneinander beabstandet sind.

Aus WO 98/33008 kennt man bereits eine Beleuchtungseinrichtung der eingangs genannten Art, bei der die Störstellen durch prismen- oder keilförmige Einformungen gebildet sind, die in die Oberfläche des Lichtleiters eingelassen sind. Dabei sind die prismenförmigen Einformungen mit ihrer Längserstreckungsrichtung jeweils etwa in Umfangsrichtung des im wesentlichen zylindrischen Lichtleiters angeordnet. Die Normalen auf die reflektierenden Oberflächen der Einformungen sind derart relativ zu den innerhalb des Lichtleiters auf die Oberflächen auftreffenden, von dem Leuchtmittel ausgesandten Lichtstrahlen angeordnet, daß das reflektierende Licht auf den dem Reflektorelement gegenüberliegenden Lichtleiter-Umfangsbereich unter einem Winkel auftrifft, der kleiner ist als der Grenzwinkel der Totalreflektion, so daß das Licht dort aus dem Lichtleiter austritt.

Um Abschattungen zwischen den Störstellen zu vermeiden, ist zwischen zueinander benachbart nebeneinander angeordneten Störstellen jeweils ein im wesentlichen störstellenfreier Lichtleiter-Oberflächenbereich vorgesehen, in den der Schatten der in Lichtabstrahlrichtung unmittelbar davor befindlichen Störstellen fällt. In Erstreckungsrichtung des Lichtleiters sind die Störstellen in gleichmäßigen Abständen zueinander angeordnet.

Die Beleuchtungseinrichtung hat den Nachteil, daß für Beleuchtungsaufgaben, bei denen eine zu beleuchtende Zielfläche an wenigstens einer Stelle heller beleuchtet werden soll als an einer dazu benachbarten Stelle, wenigstens eine zusätzliche Beleuchtungseinrichtung benötigt wird, welche die helle(n) Stelle (n) beleuchtet. Derartige ungleichmäßige Helligkeitsverteilungen können beispielsweise bei einer Ambiente-Beleuchtungseinrichtung zum Beleuchten eines Inneneinrichtungsteiles eines Kraftfahrzeugs von Vorteil sein, um an dem Inneneinrichtungsteil befindliche Funktionselemente, wie zum Beispiel einen Schalter zum Betätigen eines Fensterhebers oder ein Betätigungselement zum Verschwenken eines Fahrzeugaußenspiegels, mit größerer Helligkeit zu beleuchten als dazu benachbarte Stellen, die keine Funktionselemente aufweisen.

Es besteht deshalb die Aufgabe, eine Beleuchtungseinrichtung der eingangs genannten Art zu schaffen, die auf einfache Weise eine Beleuchtung eines Inneneinrichtungsteiles eines Kraftfahrzeugs mit einer vorgegebenen, ungleichmäßigen Helligkeitsverteilung ermöglicht.

Die Lösung dieser Aufgabe besteht darin, daß jeweils zueinander benachbarten Störstellen in Erstreckungsrichtung des Lichtleiters unterschiedliche Abstände zueinander aufweisen.

In vorteilhafter Weise ist es dadurch möglich, an unterschiedlichen, in Längserstreckungsrichtung des Lichtleiters zueinander versetzten Lichtleiterabschnitten eine unterschiedliche Lichtmenge aus dem Lichtleiter auszukoppeln. Dabei hängt die Menge des in den einzelnen Lichtleiterabschnitten ausgekoppelten Lichts von dem Abstand ab, den in Erstreckungsrichtung des Lichtleiters zueinander benachbart nebeneinander befindliche Störstellen in dem jeweiligen Lichtleiterabschnitt aufweisen. In Lichtleiterabschnitten, in denen zueinander benachbarte Störstellen einen großen Abstand zueinander aufweisen, wird eine geringere Lichtmenge oder ein kleinerer Lichtstrom aus dem Lichtleiter ausgekoppelt als in Lichtleiterabschnitten, in denen zueinander benachbarte Störstellen einen kleinen Abstand zueinander aufweisen. Durch Wahl eines entsprechenden Abstandes zwischen den Störstellen der einzelnen Lichtleiterabschnitte ist es bei der Konstruktion oder Herstellung der Beleuchtungseinrichung auf einfache Weise möglich, die pro Längeneinheit von dem Lichtleiter abgestrahlte Lichtmenge an einen auf dem zu beleuchtenden Inneneinrichtungsteils eines Kraftfahrzeugs gewünschten ungleichmäßigen Helligkeitsverlauf anzupassen.

Vorteilhaft ist, wenn die Störstellen unterschiedliche Abmessungen aufweisen. Durch diese Maßnahme kann der Helligkeitsverlauf entlang einer parallel zur Längserstreckungsrichtung des Lichtleiters auf der zu beleuchtenden Zielfläche verlaufenden Linie bei der Konstruktion oder Herstellung der Beleuchtungseinrichtung noch besser an ein vorgegebenes Helligkeitsprofil angepaßt werden.

Bei einer zweckmäßigen Ausgestaltung der Erfindung weisen die Störstellen einen unterschiedlichen Lichtreflexions- und/oder Lichtstreugrad auf. Dadurch kann eine noch ungleichmäßigere Beleuchtung unterschiedlicher Bereiche des zu beleuchtenden Innenraumes oder Inneneinrichtungsteiles des Kraftfahrzeugs erreicht werden.

Bei einer vorteilhaften Ausgestaltung der Erfindung ist vorgesehen, daß das die Störstellen unterschiedliche Arten von optischen Defekten aufweisen und daß insbesondere wenigstens eine Störstelle durch mindestens ein Reflektorelement und wenigstens eine weitere Störstelle durch zumindest ein optisches Streuelement gebildet sind. Auch durch diese Maßnahme kann der Helligkeitsverlauf entlang einer in der zu beleuchtenden Zielfläche parallel zur Längserstreckungsrichtung des Lichtleiters verlaufenden Linie bei der Herstellung der Beleuchtungseinrichtung an ein vorgegebenes Helligkeitsprofil angepasst werden.

Vorteilhaft ist, wenn mehrere, in Erstreckungsrichtung des Lichtleiters zueinander versetzte Störstellen als Reflektorelemente ausgebildetet sind, und wenn die Normalen auf die reflektierenden Oberflächen dieser Reflektorelemente derart relativ zu den darauf auftreffenden, von dem Leuchtmittel ausgesandten Lichtstrahlen angeordnet sind, daß die von den Reflektorelementen reflektierten, am Umfang des Lichtleiters auftretenden Lichtstrahlen ein konvergentes Lichtbündel bilden. Dadurch ist es insbesondere möglich, im Innenraum eines Kraftfahrzeugs angeordnete Funktionselemente, wie zum Beispiel einen Türöffner zum Öffnen einer Fahrzeugtüre, einen am Dachhimmel angebrachten Haltegriff, einen Schalter zum Bestätigen eines elektrischen Fensterhebers oder Schiebedachs mit im Vergleich zur Helligkeit dazu benachbarter beleuchteter Bereiche mit noch größerer Helligkeit zu beleuchten.

Bei einer vorteilhaften Ausführungsform der Erfindung ist vorgesehen, daß wenigstens eine optische Störstelle als Streuelement eine Farbschicht aufweist und daß gegebenenfalls mindestens eine weitere Störstelle farblos ausgebildet ist oder eine Farbschicht aufweist, deren Farbe sich von der Farbe der zuerst genannten Farbschicht unterscheidet. Dadurch ist es möglich, unterschiedliche Stellen der Inneneinrichtung eines Kraftfahrzeugs mit unterschiedlich farbigem Licht zu beleuchten. So kann beispielsweise ein im Innenraum des Kraftfahrzeugs befindliches Funktions- oder Bedienelement mit weißem Licht und von dem Funktions- oder Bedienelement beabstandete Bereiche mit farbigem, beispielsweise mit gelben oder rotem Licht beleuchtet werden.

Bei einer zweckmäßigen Ausgestaltung der Erfindung weist der Lichtleiter einen von einer geraden Linie abweichenden, an die Form eines Inneneinrichtungsteiles eines Kraftfahrzeugs angepaßten gekrümmten Verlauf auf. Der Lichtleiter kann dann unmittelbar an dem Inneneinrichtungsteil angeordnet und gegebenenfalls zumindest mit einem Teilbereich seines Querschnitts in dessen Oberfläche eingelassen sein.

Besonders vorteilhaft ist, wenn der Lichtleiter an seinem Außenumfang einen sich vorzugsweise in Längsrichtung des Lichtleiters erstreckenden Umfangsbereich hat, der gegenüber einem in Umfangsrichtung dazu benachbarten Bereich vorsteht oder zurückspringt. Dieser Umfangsbereich kann dann als Optikschulter zum lagerichtigen Positionieren des Lichtleiters bei der Montage dienen. Die Optikschulter kann beispielsweise in eine dazu passende Nut einer Halterung oder eines Inneneinrichtungsteils, an dem der Lichtleiter befestigt werden soll, eingesetzt werden.

Bei einer vorteilhaften Ausführungsform der Erfindung ist vorgesehen, daß der Lichtleiter an seinem Außenumfang wenigstens zwei in Umfangsrichtung des Lichtleiters versetzt zueinander angeordnete optische Störstellenbereiche aufweist, die jeweils innerhalb eines sich am Außenumfang des Lichtleiters in dessen Längsrichtung erstreckenden streifenförmigen Bereiches angeordnet sind, und daß wenigstens zwei dieser streifenförmigen Bereiche in Umfangsrichtung überlappungsfrei durch dazwischen befindliche störstellenfreie streifenförmige Bereiche voneinander beabstandet sind. Dadurch ergibt sich ein einfach aufgebauter Lichtleiter, der es ermöglicht, mehrere zu beleuchtenden Stellen, bei denen die geraden Verbindungslinien zwischen dem Lichtleiter und den zu beleuchtenden Stellen in unterschiedlichen Richtungen angeordnet sind, mittels nur eines einzigen Lichtleiters mit getrennten Lichtbündeln zu beleuchten. Die Beleuchtungseinrichtung ermöglicht die Abstrahlung von gerichtetem und/oder diffusem Licht in unterschiedlicher Raumsektoren bezüglich der Längsmittelachse des Lichtleiters oder in unterschiedlicher Abstrahlrichtungen, so daß in diesen Raumsektoren oder Abstrahlrichtungen befindliche Inneneinrichtungsteile mit der jeweils gewünschten Lichtverteilung beleuchtet werden können. Dabei können gegebenenfalls zwischen diesen Raumsektoren befindliche Bereiche unbeleuchtet bleiben, so daß das von dem Leuchtmittel abgestrahlte Licht unter Vermeidung von Abstrahlverlusten in Bereiche, die nicht beleuchtet werden sollen, auf die zu beleuchtenden Stellen verteilt werden kann. Gegebenenfalls ist es sogar möglich. die Störstellenbereiche so auszubilden, daß die in den unterschiedlichen Raumsektoren befindlichen, zu beleuchtenden Stellen mit einer unterschiedlichen Helligkeit beleuchtet werden. Die in Längserstreckungsrichtung des Lichtleiters orientierten Abstände von jeweils zueinander benachbart nebeneinander befindlichen Störstellen können in wenigstens einem Störstellenbereich unterschiedlich und in wenigstens einem weiteren Störstellenbereich bei allen dort befindlichen Störstellen gleich groß sein. Es sind aber auch andere Ausführungsformen denkbar, bei denen die Abstände von jeweils zueinander benachbart nebeneinander befindlichen Störstellen in allen Störstellenbereichen unterschiedlich sind.

Bei einer bevorzugten Ausführungsform der Erfindung ist der Lichtleiter und/oder das Leuchtmittel hinter einer Blende angeordnet, wobei diese Blende vorzugsweise durch einen Teilbereich des Inneneinrichtungsteiles gebildet ist. Der Lichtleiter und das Leuchtmittel sind dann für den Benutzer des Kraftfahrzeugs unsichtbar hinter der Blende angeordnet, wodurch es möglich ist, die Beleuchtungseinrichtung unauffällig in die Inneneinrichtung des Kraftfahrzeugs zu integrieren. Außerdem wird durch die Blende eventuell aus dem Lichtleiter austretendes Streulicht, daß vom Benutzer der Beleuchtungseinrichtung als störend empfunden wird, abgedeckt.

Bei einer besonders vorteilhaften Ausführungsform der Erfindung ist zumindest ein Abschnitt des Lichtleiters zur Beleuchtung des Türspiegels einer Fahrzeugtüre an der Türinnenverkleidung der Fahrzeugtüre angeordnet, wobei der Lichtleiter vorzugsweise etwa parallel zur Ebene des Türspiegels verläuft. Der Lichtleiter kann dann beispielsweise am oberen Rand des Türspiegels hinter einer dort befindlichen Blende angeordnet sein.

Vorteilhaft ist, wenn die optischen Störstellen von der Lichteinkoppelfläche des Lichtleiters durch einen im wesentlichen störstellenfreien Lichtleiterabschnitt beabstandet sind. Die Lichteinkoppelfläche und das Leuchtmittel können dann an einer von den Lichtauskoppelflächen des Lichtleiters beabstandeten Stelle angeordnet sein, beispielsweise im Inneren eines Inneneinrichtungsteiles des Kraftfahrzeugs oder hinter einer Verkleidung.

Nachfolgend ist ein Ausführungsbeispiel der Erfindung anhand der Zeichnung näher erläutert. Es zeigen zum Teil stärker schematisiert:
- Fig. 1: eine ein Leuchtmittel und einen Lichtleiter ausweisende Beleuchtungseinrichtung zur Beleuchtung eines Inneneinrichtungsteiles eines Kraftfahrzeug, wobei auch einige Lichtstrahlen strichliniert dargestellt sind,

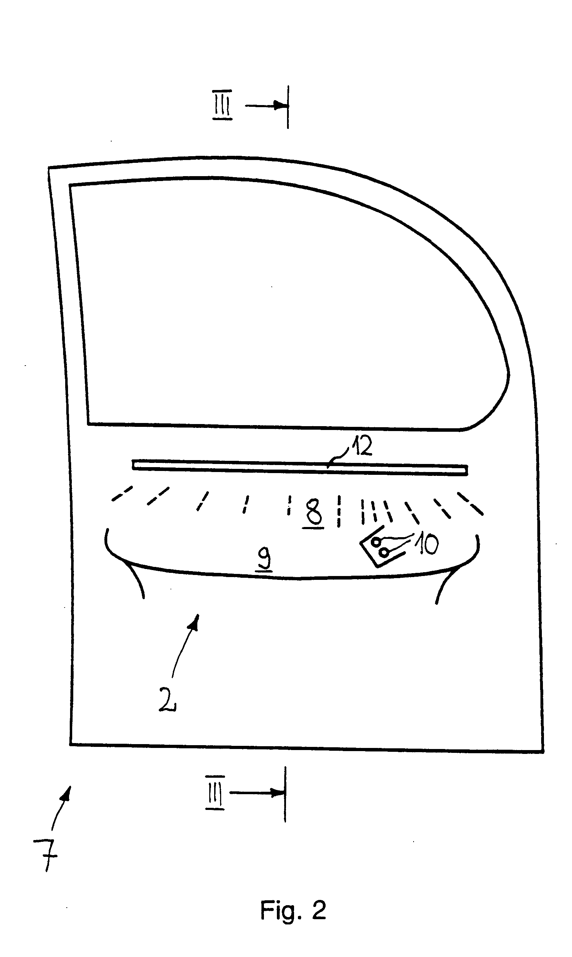

- Fig. 2: eine Ansicht auf die Innenseite einer Fahrzeugtüre, die eine Beleuchtungseinrichtung zum Beleuchten ihres Türspiegels aufweist, wobei beispielhaft auch einige Lichtstrahlen strichliniert dargestellt sind,

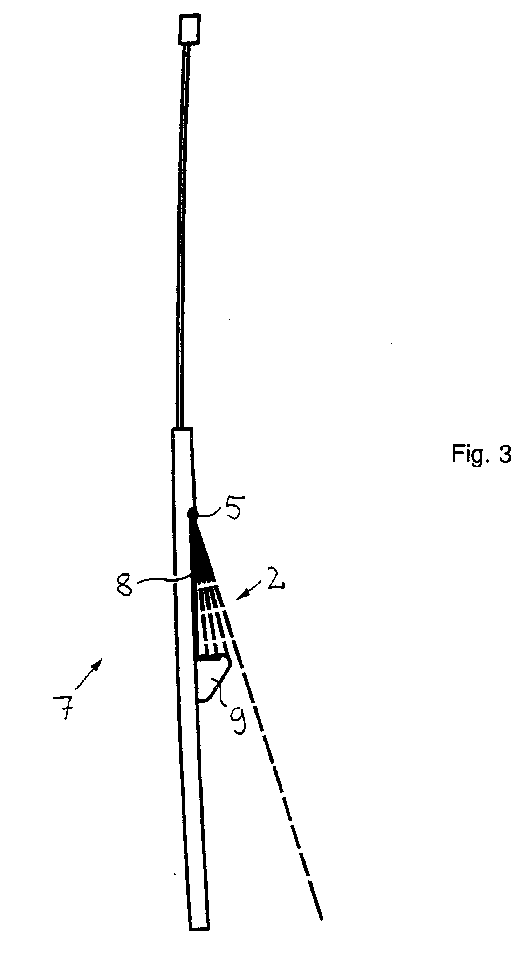

- Fig. 3: einen Querschnitt durch die Fahrzeugtüre in der in Fig. 2 mit III bezeichneten Ebene,
- Fig. 4: einen vergrößerten Ausschnitt aus Fig. 3, der den in den Türspiegel eingelassenen Lichtleiter besonders gut erkennen läßt, und
- Fig. 5: einen Querschnitt durch einen Lichtleiter, der zwei in Umfangsrichtung versetzt zueinander angeordnete optische Störstellenbereiche aufweist.

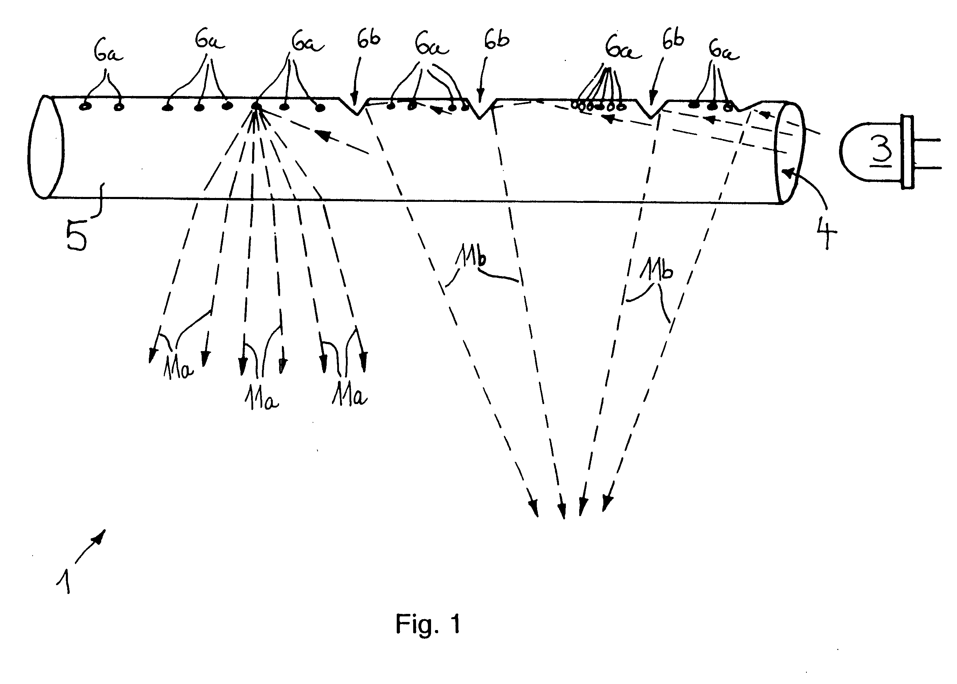

Eine im ganzen mit 1 bezeichnete Beleuchtungseinrichtung zur Beleuchtung eines Inneneinrichtungsteiles 2 eines Kraftfahrzeugs weist als Leuchtmittel 3 eine Leuchtdiode auf, die mit ihrer Abstrahlseite der Lichteinkoppelfläche 4 eines Lichtleiters 5 zugewandt ist. In Fig. 1 ist erkennbar, daß der Lichtleiter 5 im wesentlichen stabförmig ausgebildet ist und einen etwa zylindrischen Querschnitt aufweist. Das Leuchtmittel 3 ist an einer der Stirnseiten des Lichtleiters 5 angeordnet. Es sind aber auch andere Ausführungsbeispiele denkbar, bei denen die Lichteinkoppelfläche 4 an einem Teilbereich des Außenumfangs des Lichtleiters 5 vorgesehen sein kann und/oder bei denen das von dem Leuchtmittel 3 entfernte Stirnende des Lichtleiters 5 verspiegelt ist. Es können auch an beiden Enden des Lichtleiters 5 Leuchtmittel 3 angeordnet sein.

In Fig. 1 ist erkennbar, daß der Lichtleiter 5 an seinem Außenumfang mehrere in Erstreckungsrichtung des Lichtleiters 5 zueinander versetzte optische Störstellen 6a, 6b, aufweist, von denen die Störstellen 6a durch eine lichtstreuende Lackschicht und die Störstellen 6b als in die Oberfläche des Lichtleiters 5 eingelassene Prismen ausgebildet sind. Anstelle der Farbschicht oder zusätzlich zu dieser können die Störstellen 6a auch lichtstreuende Oberflächendefekte aufweisen, beispielsweise eine rauhe Oberflächenstruktur.

Das innerhalb des Lichtleiters 5 auf die Störstellen 6a auftreffende, von dem Leuchtmittel 3 abgestrahlte Licht wird an den Störstellen 6a, 6b so gestreut, daß es an einem den betreffenden Störstellen 6a gegenüberliegenden Umfangsbereich des Lichtleiters 5 unter einem Winkel auf die Oberfläche des Lichtleiters 5 auftrifft, bei dem die Bedingung für Totalreflektion nicht mehr erfüllt ist. Das innerhalb des Lichtleiters 5 auf die Störstellen 6b auftreffende Licht wird an diesen unter Ausnutzung der Totalreflektion reflektiert und trifft an der den betreffenden Störstellen 6b gegenüberliegenden Umfangsbereich des Lichtleiters 5 unter einem Winkel auf die Oberfläche des Lichtleiters 5 auf, bei dem die Bedingung für Totalreflektion nicht mehr erfüllt ist. Somit tritt das auf die Störstellen 6a, 6b auftreffende Licht an der den Störstellen 6a, 6b gegenüberliegenden Seite des Lichtleiters aus diesem aus.

In Fig. 1 ist erkennbar, daß benachbart zueinander angeordnete Störstellen 6a, 6b jeweils durch im wesentlichen störstellenfreie Bereiche voneinander beabstandet sind und das die Abstände zwischen den Störstellen 6a, 6b unterschiedlich ausgebildet und so gewählt sind, daß sich auf dem zu beleuchtenden Inneneinrichtunsteil 2 entlang des Lichtleiters 5 ein vorgegebenes Helligkeitsprofil ergibt, das von einer gleichmäßigen Beleuchtung abweicht.

Das Inneneinrichtungsteil 2 ist an der Innenseite einer Fahrzeugtüre 7 angeordnet und weist einen Türspiegel 8, eine unterhalb des Türspiegels 8 angeordnete Armauflage 9 und in der Armauflage integrierte Funktionselemente 10 zum Betätigen eines elektrischen Fensterhebers auf. Mittels der Beleuchtungseinrichtung 1 ist das Inneneinrichtungsteil 2 so beleuchtbar, daß es für den Benutzer des Kraftfahrzeugs im Dunkeln zwar sichtbar ist, wobei die Helligkeit jedoch so gewählt ist, daß der Benutzer und insbesondere der Fahrer des Kraftfahrzeugs während der Fahrt durch das Licht der Beleuchtungseinrichtung 1 nicht gestört wird.

Damit die Funktionselemente 10 bei Dunkelheit leicht auffindbar sind, sind sie heller beleuchtet als die übrigen Bereiche des Inneneinrichtungsteiles 2. In einem zu den Funktionselementen 10 benachbarten Abschnitt des Lichtleiters 5 weisen dazu die Störstellen 6a, 6b einen geringeren Abstand und somit eine höhere Dichte auf als in den übrigen Abschnitten des Lichtleiters 5.

In Fig. 1 ist erkennbar, daß die Normalen auf die reflektierenden Oberflächen der als Reflektorelemente ausgebildeten Störstellen 6b derart relativ zu den innerhalb des Lichtleiters 5 darauf auftreffenden, von dem Leuchtmittel 3 ausgesandten Lichtstrahlen angeordnet sind, daß die von den Störstellen 6b reflektierten, am Umfang des Lichtleiters austretenden Lichtstrahlen ein konvergentes Lichtbündel bilden, dessen Lichstrahlen 11b in Richtung auf die Funktionselemente 10 weisen. In Fig. 1 ist weiter erkennbar, daß auf die Störstellen 6a auftreffendes Licht jeweils in ein diffuses Lichtbündel mit voneinander wegweisenden Lichtstrahlen 11a gestreut wird.

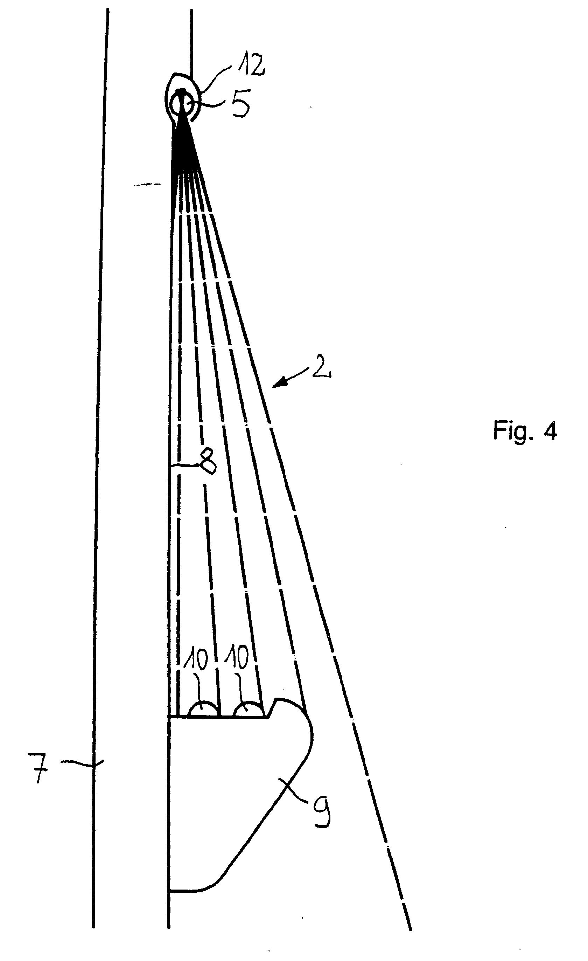

Wie in Fig. 1 besonders gut erkennbar ist, ist der die Störstellen 6a, 6b aufweisende Abschnitt des Lichtleiters 5 an der Türinnenverkleidung der Fahrzeugtüre etwa in der Ebene des Türspiegels 8 angeordnet. Dabei verläuft dieser Abschnitt des Lichtleiters 5 etwa oberhalb des zu beleuchtenden Bereichs des Türspiegels 8 im wesentlichen in horizontaler Richtung. In Fig. 4 ist erkennbar, daß der Lichtleiter 5 bereichsweise in den Türspiegel 8 eingelassen und mit seiner Längsmittelachse etwa parallel zur Ebene des Türspiegels 8 verläuft. Dabei ist die Längsmittelachse des Lichtleiters 5 etwas von der Oberflächenebene des Türspiegels 8 in Richtung zum Fahrzeuginnenraum hin beabstandet. Bei dem Ausführungsbeispiel nach Fig. 4 ist dieser Abstand kleiner gewählt als der Radius des Lichtleiters 5.

Der Lichtleiter 5 ist hinter einer Blende 12 angeordnet, die einstückig mit dem Türspiegel 8 ausgebildet sein kann. Die Blende 12 begrenzt einen Kanal, in dem der Lichtleiter 5 angeordnet ist. An seiner Unterseite weist der Kanal eine schlitzförmige Lichtaustrittsöffnung auf, durch die das von dem Lichtleiter 5 abgestrahlte Licht hindurchtritt. In Fig. 4 ist erkennbar, daß das von dem Lichtleiter 5 abgestrahlte Licht einen Lichtvorhang bildet, dessen Lichtstrahlen den Türspiegel 8, die Armauflage 9 und die Funktionselemente 10 beleuchten.

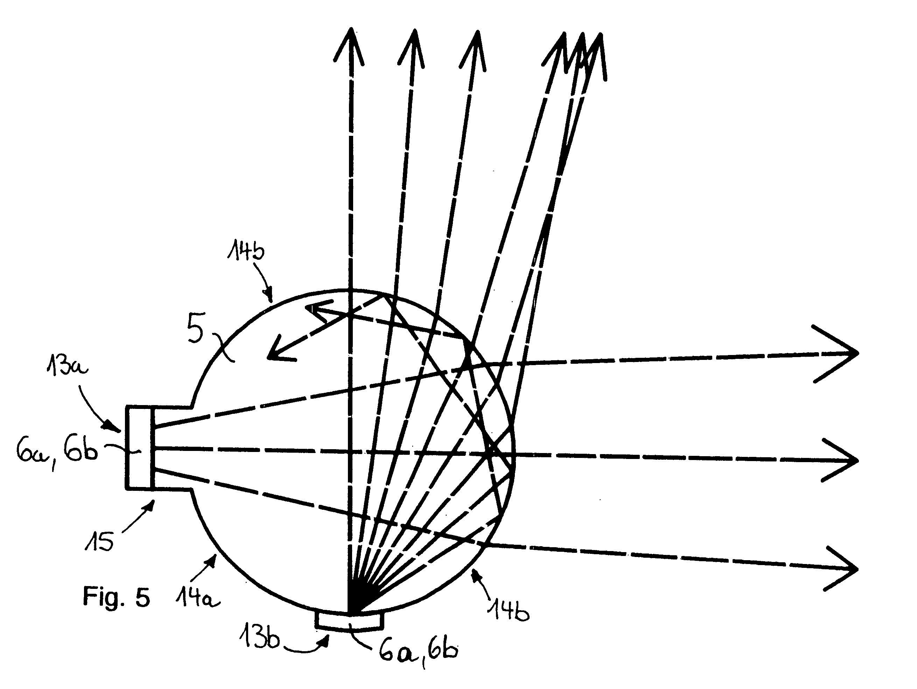

Bei dem Ausführungsbeispiel nach Fig. 5 weist der Lichtleiter 5 an seinem Außenumfang wenigstens 2 streifenförmig ausgebildete optische Störstellenbereiche 13a, 13b auf, die sich jeweils in Längsrichtung des Lichtleiters 1 erstrecken. Zumindest einer der Störstellenbereiche 13a, 13b weist mehrere Störstellen 6a, 6b auf, von denen jeweils zueinander benachbarte Störstellen 6a, 6b in Erstreckungsrichtung des Lichtleiters 5 in unterschiedlichen Abstände zueinander angeordnet sind, so daß sich an den von dem auf diese(n) Störstellenbereich(e) 13a, 13b auftreffenden Licht beleuchteten Stellen der Inneneinrichtung des Kraftfahrzeugs in Erstreckungsrichtung des Lichtleiters 5 eine ungleichmäßiger Beleuchtungsstärkeverlauf ergibt.

In Umfangsrichtung des Lichtleiters 5 sind die Störstellenbereiche 13a, 13b überlappungsfrei zueinander versetzt und durch dazwischen befindliche, im wesentlichen störstellenfreie Bereiche 14a, 14b voneinander beabstandet. Diese störstellenfreien Bereiche 14a, 14b sind ebenfalls streifenförmig ausgebildet und verlaufen am Umfang des Lichtleiters 1 in dessen Längsrichtung. Der in Fig. 5 gezeigte Lichtleiter 5 ermöglicht die Abstrahlung von gerichtetem und/oder diffusem Licht in unterschiedliche Raumsektoren bezüglich der Längsmittelachse des Lichtleiters 5 oder in unterschiedliche Abstrahlrichtungen, so daß in diesen Raumsektoren oder Abstrahlrichtungen befindliche Inneneinrichtungsteile mit der jeweils gewünschten Lichtverteilung beleuchtet werden können. Dabei können gegebenenfalls zwischen diesen Raumsektoren befindliche Bereiche unbeleuchtet bleiben, so daß das von dem Leuchtmittel 3 abgestrahlte Licht unter Vermeidung von Abstrahlverlusten in Bereiche, die nicht beleuchtet werden sollen, auf die zu beleuchteten Stellen verteilt werden kann.

In Fig. 5 ist noch erkennbar, daß der Lichtleiter 5 an seinem Außenumfang einen sich vorzugsweise in Längsrichtung des Lichtleiters 5 erstreckenden, als Optikschulter ausgebildeten Umfangsbereich 15 hat, der gegenüber in Umfangsrichtung beidseits dazu benachbarten Bereichen vorsteht und in Gebrauchsstellung in eine zu dem Umfangsbereich 15 passende Aufnahmevertiefung einer Halterung eingesetzt ist. Die Optikschulter 15 ermöglicht bezüglich einer Drehung um die Längsachse des Lichtleiters 1 einen lagerichtigen Einbau des Lichtleiters 1.

Der hinter der Blende 12 angeordnete, die optischen Störstellen 6a, 6b aufweisende Absschnitt des Lichtleiters 5 ist über einen im wesentlichen störstellenfreien, in Fig. 1 nicht näher dargestellten Lichtleiterabschnitt mit dem an der dem Fahrzeuginnenraum abgewandten Rückseite der Türinnenverkleidung angeordneten Leuchtmittel 3 verbunden. An der Rückseite der Türinnenverkleidung sind außerdem die elektrische Stromversorgungsanschlüsse für das Leuchtmittel 5 sowie gegebenenfalls eine Ansteuereinrichtung für das Leuchtmittel 5 angeordnet.

Die insbesondere zur Beleuchtung des Innenraums oder eines Inneneinrichtungsteils 2 eines Kraftfahrzeugs vorgesehene Beleuchtungseinrichtung 1 weist also mindestens ein Leuchtmittel 3 und zumindest einen mit seiner Lichteinkoppelfläche 4 im Lichtabstrahlbereich des Leuchtmittels 3 angeordneten stabförmigen Lichtleiter 5 auf. Am Außenumfang des Lichtleiters 5 sind optische Störstellen 6a, 6b angeordnet, die in Erstreckungsrichtung des Lichtleiters 5 zueinander versetzt sind. Die Störstellen 6a, 6b sind so ausgebildet, daß die innerhalb des Lichtleiters 5 auf die Störstellen 6a, 6b auftreffende Lichtstrahlen derart gestreut und/oder reflektiert werden, daß sie aus dem Lichtleiter 5 austreten. Benachbart nebeneinander angeordneten Störstellen 6a, 6b sind jeweils durch im wesentlichen störstellenfreie Bereiche voneinander beabstandet. Die Abstände zwischen jeweils zueinander benachbarten Störstellen 6a, 6b sind unterschiedlich, um das Inneneinrichtungsteil 2 ungleichmäßig zu beleuchten.

## Patentansprüche

1. Beleuchtungseinrichtung (1), insbesondere zur Beleuchtung des Innenraumes oder eines Inneneinrichtungsteiles (2) eines Kraftfahrzeugs, mit mindestens einem Leuchtmittel (3) und zumindest einem mit seiner Lichteinkoppelfläche (4) im Lichtabstrahlbereich des Leuchtmittels (3) angeordneten stabförmigen Lichtleiter (5), der an seinem Außenumfang in Erstreckungsrichtung des Lichtleiters (5) zueinander versetzte optische Störstellen (6a, 6b) aufweist, an denen innerhalb des Lichtleiters (5) darauf auftreffendes Licht derart gestreut und/oder reflektiert wird, daß es an einem der betreffenden Störstelle (6a, 6b) gegenüberliegenden Umfangsbereich des Lichtleiters (5) aus diesem austritt, wobei zueinander benachbart nebeneinander angeordneten Störstellen (6a, 6b) jeweils durch einen im wesentlichen störstellenfreien Bereich voneinander beabstandet sind, **dadurch gekennzeichnet, daß** jeweils zueinander benachbarte Störstellen (6a, 6b) in Erstreckungsrichtung des Lichtleiters (5) unterschiedliche Abstände zueinander aufweisen.

2. Beleuchtungseinrichtung (1) nach Anspruch 1, **dadurch gekennzeichnet, daß** die Störstellen (6a, 6b) unterschiedliche Abmessungen aufweisen.

3. Beleuchtungseinrichtung (1) nach Anspruch 1 oder 2, **dadurch gekennzeichnet, daß** die Störstellen (6a, 6b) einen unterschiedlichen Lichtreflexions- und/oder Lichtstreugrad aufweisen.

4. Beleuchtungseinrichtung (1) nach einem der Ansprüche 1 bis 3, **dadurch gekennzeichnet, daß** die Störstellen (6a, 6b) unterschiedliche Arten von optischen Defekten aufweisen und daß insbesondere wenigstens eine Störstelle (6a, 6b) durch mindestens ein Reflektorelement und wenigstens eine weitere Störstelle (6b, 6a) durch zumindest ein optisches Streuelement gebildet sind.

5. Beleuchtungseinrichtung (1) nach einem der Ansprüche 1 bis 4, **dadurch gekennzeichnet, daß** mehrere, in Erstreckungsrichtung des Lichtleiters (5) zueinander versetzte Störstellen (6b) als Reflektorelemente ausgebildetet sind, und daß die Normalen auf die reflektierenden Oberflächen dieser Reflektorelemente derart relativ zu den darauf auftreffenden, von dem Leuchtmittel ausgesandten Lichtstrahlen angeordnet sind, daß die von den Reflektorelementen reflektierten, am Umfang des Lichtleiters austretenden Lichtstrahlen (11b) ein konvergentes Lichtbündel bilden.

6. Beleuchtungseinrichtung (1) nach einem der Ansprüche 1 bis 5, **dadurch gekennzeichnet, daß** wenigstens eine optische Störstelle (6a, 6b) als Streuelement eine Farbschicht aufweist und daß gegebenenfalls mindestens eine weitere Störstelle (6a, 6b) farblos ausgebildet ist oder eine Farbschicht aufweist, deren Farbe sich von der Farbe der zuerst genannten Farbschicht unterscheidet.

7. Beleuchtungseinrichtung (1) nach einem der Ansprüche 1 bis 6, **dadurch gekennzeichnet, daß** der Lichtleiter (5) einen von einer geraden Linie abweichenden, an die Form eines Inneneinrichtungsteils (2) eines Kraftfahrzeugs angepaßten gekrümmten Verlauf aufweist.

8. Beleuchtungseinrichtung (1) nach einem der Ansprüche 1 bis 7, **dadurch gekennzeichnet, daß** der Lichtleiter (5) an seinem Außenumfang einen sich vorzugsweise in Längsrichtung des Lichtleiters erstreckenden Umfangsbereich (15) hat, der gegenüber einem in Umfangsrichtung dazu benachbarten Bereich vorsteht oder zurückspringt.

9. Beleuchtungseinrichtung (1) nach einem der Ansprüche 1 bis 8, **dadurch gekennzeichnet, daß** der Lichtleiter (5) an seinem Außenumfang wenigstens zwei in Umfangsrichtung des Lichtleiters (5) versetzt zueinander angeordnete optische Störstellenbereiche (13a, 13b) aufweist, die jeweils innerhalb eines sich am Außenumfang des Lichtleiters in dessen Längsrichtung erstreckenden streifenförmigen Bereiches angeordnet sind, und daß wenigstens zwei dieser streifenförmigen Bereiche in Umfangsrichtung überlappungsfrei durch dazwischen befindliche störstellenfreie streifenförmige Bereiche voneinander beabstandet sind.

10. Beleuchtungseinrichtung (1) nach einem der Ansprüche 1 bis 9, **dadurch gekennzeichnet, daß** der Lichtleiter (5) und/oder das Leuchtmittel (3) hinter einer Blende (12) angeordnet ist und daß diese Blende (12) vorzugsweise durch einen Teilbereich des Inneneinrichtungsteiles (2) gebildet ist.

11. Beleuchtungseinrichtung (1) nach einem der Ansprüche 1 bis 10, **dadurch gekennzeichnet, daß** zumindest ein Abschnitt des Lichtleiters (5) zur Beleuchtung des Türspiegels (8) einer Fahrzeugtüre (7) an der Türinnenverkleidung der Fahrzeugtüre (7) angeordnet ist, und daß der Lichtleiter vorzugsweise etwa parallel zur Ebene des Türspiegels (8) verläuft.

12. Beleuchtungseinrichtung (1) nach einem der Ansprüche 1 bis 11, **dadurch gekennzeichnet, daß** die optischen Störstellen (6a, 6b) von der Lichteinkoppelfläche (4) des Lichtleiters (5) durch einen im wesentlichen störstellenfreien Lichtleiterabschnitt beabstandet sind.
